# DEMANDE DE BREVET EUROPEEN

(11) **EP 0 811 990 A1**
(43) Date de publication de la demande: **10.12.1997**
(21) Numéro de dépôt: 97401158.7
(22) Date de dépôt: 27.05.1997
(51) Int. Cl.: G21C 7/12

(54) **Dispositif de désaccouplement d'une tige de commande d'un élément absorbant pour réacteur nucléaire**

(30) Priorité: 29.05.1996 FR 9606606
(71) Demandeur: COMMISSARIAT A L'ENERGIE ATOMIQUE, 75015 Paris (FR)
(72) Inventeur: Bergamaschi, Yves, 13770 Venelles (FR)
(74) Mandataire: Ilgart, Jean-Christophe

(57) **Abrégé**

La tige de commande (4) porteuse d'éléments absorbants (5) contient une tige de manoeuvre (37) repoussée vers le haut par des rondelles (38) et saillant par une extrémité en bouton-poussoir (52). Quand le désaccouplement des éléments absorbants est décidé, la tige de commande est relevée (4) pour que les dents (62) de cliquets (56) déployés auparavant pèsent sur le bouton (52), abaissent la tige de manoeuvre (37) et permettent à des billes (33) d'accouplement d'entrer dans une gorge (35) au bas de la tige, ce qui détache le pommeau (18) porteur des éléments absorbant (5) . Application aux réacteurs nucléaires, notamment à eau sous pression.

## Description

La présente invention concerne un équipement de tige de commande pour réacteur nucléaire comportant un moyen de désaccouplement entre la tige de commande et son ensemble absorbant associé, pouvant être mis en service avant l'ouverture de la cuve à partir de l'extrémité supérieure de cette tige à l'aide de son mécanisme de déplacement et d'une butée escamotable.

On sait que, pour le pilotage des réacteurs à eau pressurisée industriels actuellement construits, l'on dispose généralement de deux moyens d'action sur la réactivité : la dilution d'un poison neutronique (acide borique) dans l'eau primaire circulant dans le soeur et le déplacement vertical d'ensembles solides et compacts absorbeurs de neutrons dans certains des assemblages combustibles du coeur.

On sait également que le déplacement de ces ensembles absorbants est obtenu à l'aide de mécanismes électromécaniques, le plus souvent du type pas à pas à cliquets ou bien encore à vis et écrou, logés, l'exception de leurs moyens de commande qui sont électromagnétiques, à l'intérieur d'une enceinte étanche tubulaire en communication avec l'intérieur de la cuve du réacteur et dressée verticalement au-dessus du couvercle de fermeture de cette cuve.

Ces mécanismes de déplacement des ensembles absorbants collaborent avec une tige centrale de faible diamètre et de très grande longueur, dite "tige de commande", qui descend verticalement à l'intérieur de la cuve et supporte un ensemble absorbant par des moyens de liaison déverrouillables manuellement à partir de son extrémité supérieure, à l'aide d'un outil spécial, une fois que le couvercle de cuve est enlevé.

Enfin, on sait le fonctionnement des réacteurs à eau pressurisée industriels largement répandus nécessite le retrait périodique des assemblages combustibles du coeur pour une réalimentation en combustible environ une fois par an. Pour ce faire, après avoir enlevé le couvercle de cuve, les tiges de commande sont désaccouplées manuellement, une à une, de leur ensemble absorbant respectif à l'aide de l'outil spécial, et les équipements internes du réacteur au-dessus du coeur sont ensuite évacués en même temps que l'ensemble des tiges de commande, les tiges étant soulevées par les équipements internes.

Les assemblages combustibles sont alors découverts et peuvent être retirés du coeur du réacteur. Naturellement, le réacteur doit être à l'arrêt durant ces opérations qui s'effectuent sous eau et le maintien dans l'état d'arrêt est réalisé, pour satisfaire aux normes de sécurité, par l'introduction complète des ensembles absorbants dans les assemblages combustibles et la dilution dans l'eau primaire d'un poison neutronique.

La manoeuvre manuelle des liaisons, pour désaccoupler les tiges de commande des ensembles absorbants, se situe sur le chemin critique des opérations réalisées lors de l'arrêt du réacteur pour procéder à un rechargement de son coeur, mais aussi à une maintenance ou à un dépannage éventuel. Il faut un temps assez long pour installer le matériel nécessaire au désaccouplement, défaire l'ensemble des liaisons et contrôler le désaccouplement : par exemple une vingtaine d'heures dans le cas des réacteurs électrogènes à eau pressurisée de forte puissance actuellement construits. Pendant ce temps, le personnel est exposé à des radiations pouvant être relativement importantes dans le cas d'une purification insuffisante de l'eau primaire.

On connaît un dispositif de désaccouplement entre une tige de commande et son ensemble absorbant associé, décrit dans le brevet français 2 261 595 déposé au nom de la société Westinghouse, qui permet le désaccouplement avant l'enlèvement du couvercle de fermeture de la cuve en se servant du mécanisme de déplacement de la tige.

Le désaccouplement et aussi le réaccouplement se font en abaissant puis en relevant la tige de commande alors que l'ensemble absorbant est inséré à fond dans l'assemblage combustible. Ces mouvements ont pour effet d'amener une broche ou une patte à faire tourner un cylindre en cheminant dans un réseau de gorges creusées dans ce cylindre et aussi d'amener la broche ou patte à se trouver en l'une des deux positions espacées axialement, provoquant la mise au repos ou au travail des moyens d'accouplement qui forment l'extrémité inférieure de la tige de commande et sont, suivant le mode de réalisation, du type à lames flexibles ou à baïonnette. L'abaissement de la tige de commande pour actionner les moyens d'accouplement est obtenu en exerçant un effort de compression sur la tige au niveau de son bout supérieur.

Un tel dispositif a pour avantage d'éviter le désaccouplement manuel des liaisons après l'ouverture de la cuve et donc de réduire la durée des opérations de rechargement du coeur, d'entretien ou analogue, et de diminuer la durée d'exposition aux radiations du personnel.

Toutefois, on peut regretter que le désaccouplement soit obtenu par l'application d'un effort de compression sur la tige de commande. En effet, bien que l'on puisse se doter de moyens de contrôle des efforts appliqués sur la tige suffisamment précis, on peut craindre un flambage accidentel de cette tige consécutivement à l'application d'une surcharge.

On peut regretter également que les moyens d'accouplement, au bas de la tige de commande, restent engagés dans l'organe de préhension de l'ensemble absorbant lorsqu'ils sont en position de repos.

En effet, on peut craindre une extraction incontrôlée d'un ou de plusieurs ensembles absorbants hors des assemblages combustibles lors de l'évacuation des équipements internes couvrant le coeur si ceux-ci soulèvent, de façon classique, les tiges de commande. Cela, consécutivement par exemple à un défaut d'alignement entre les tiges de commande et l'organe de préhension de leur ensemble absorbant associé, produisant un accrochage intempestif entre les parties en question.

Ainsi, la présente invention vise à fournir des moyens pour défaire les liaisons entre les tiges de commande et les ensembles absorbants avant l'ouverture du couvercle de cuve afin de supprimer la manoeuvre manuelle classique et donc de réduire la durée des opérations de rechargement, d'entretien ou analogue et de diminuer ainsi les doses d'exposition aux rayonnements du personnel. Cela, sans aucun risque de flambage des tiges de commande et de retrait intempestif des grappes hors des assemblages combustibles lors de l'évacuation des équipements internes supérieurs.

Pour atteindre ce résultat, l'invention propose l'usage d'une tige de commande dotée en partie basse de moyens d'accouplement, du type à billes, qui sont automatiquement physiquement séparés du pommeau de la grappe lorsque les moyens en question sont amenés en position de repos. La demande de brevet français 94.14922 pas publiée à ce jour décrit aussi des moyens d'accouplement à billes entre la tige de commande et son ensemble absorbant, mais le mécanisme de désaccouplement est différent de celui de l'invention et comprend en particulier un piston mobile qui provoque le désaccouplement dans le cas d'une dépressurisation accidentelle de l'enceinte étanche dressée au-dessus du couvercle de cuve.

La mise au repos des moyens d'accouplement de l'invention est déclenchée par un déplacement relatif en translation de la tige de commande par rapport à un organe de verrouillage des moyens d'accouplement, cet organe étant prolongé vers le haut par une tige de manoeuvre interne à la tige de commande et un bouton-poussoir placé en saillie au sommet de cette seconde.

Le déplacement relatif est produit en soulevant la tige de commande à l'aide d'un mécanisme de déplacement, par exemple du type à vis et écrou fabriqué par certains constructeurs, alors que le bouton-poussoir est en appui contre une butée escamotable pouvant, par exemple, être constituée d'une série de cliquets commandés pareillement à ceux du mécanisme pas à pas à cliquets largement répandu.

Le brevet américain 3 262 730 offre aussi certaines ressemblances avec l'invention. Pour résumer, la tige de manoeuvre coulisse dans la tige de commande du déplacement des éléments absorbants, et son extrémité supérieure dépasse de la tige de commande et finit en un bouton-poussoir repoussé vers le bas pour commencer les opérations de désaccouplement. Mais ce mouvement ne produit qu'un déverrouillage d'un mécanisme de sécurité à billes qui solidarise normalement la tige de manoeuvre et la tige de commande : le désaccouplement n'est produit qu'ensuite, en soulevant la tige de manoeuvre, la tige de commande restant immobile dans un premier temps. La tige de manoeuvre est rappelée vers le bas par un ressort comprimé entre elle et la tige de commande, et le mouvement du bouton-poussoir n'a pas d'effet sur celui de la tige de manoeuvre. Enfin, l'effort de compression du bouton-poussoir est apparemment assuré par un outil spécial descendu dans le mécanisme de commande, mais pas par l'action d'une butée escamotable que le bouton-poussoir rencontre automatiquement quand il est levé.

L'inconvénient essentiel de ce système est qu'il est plus compliqué que l'invention, et qu'il nécessite de pousser sur le bouton pour déverrouiller la tige de manoeuvre, puis de saisir le sommet de la tige de manoeuvre et de la soulever avant de soulever la tige de commande elle-même pour finir le désaccouplement ; l'invention permet d'arriver au même résultat en remontant simplement la tige de commande, après l'avoir descendue pour placer les butées escamotables au-desus du bouton-poussoir au sommet de la tige de manoeuvre, et après avoir déployé ces butées, qui retiennent la tige de manoeuvre et l'enfoncent dans la tige de commande quand celle-ci pousuit son ascension, ce qui suffit à lâcher la grappe d'éléments absorbants.

Pour résumer, le mécanisme de désaccouplement d'une tige de commande d'un élément absorbant pour réacteur nucléaire comprend une tige de manoeuvre de désaccouplement, la tige de manoeuvre coulissant dans la tige de commande et ayant une extrémité supérieure dépassant de la tige de commande, et un système de verrouillage coopérant avec la tige de manoeuvre, la tige de commande et l'élément absorbant, caractérisé en ce que la tige de manoeuvre est repoussée vers le haut par un ressort comprimé entre la tige de manoeuvre et la tige de commande, une butée escamotable est prévue au-dessus de ladite extrémité supérieure pour appuyer sur ladite extrémité supérieure lorsque la tige de commande est soulevée, et en ce que la tige de manoeuvre et le système de verrouillage sont conçus pour opérer le désaccouplement en enfonçant la tige de manoeuvre vers le bas, dans la tige de commande.

On va maintenant décrire à titre d'exemple non limitatif, en se référant aux figures jointes en annexe, un mode particulier d'exécution de l'invention :
- la figure 1 est une vue en élévation et en coupe partielle de la cuve et des principaux composants internes d'un réacteur concerné par l'invention,
- la figure 2 est une vue de la partie des composants internes contenus dans le cadre indiqué par C sur la figure 1,
- la figure 2a est une coupe de la figure 2 selon la ligne II-II,
- la figure 3 est une vue en coupe par un plan vertical de symétrie de l'invention, le réacteur étant en fonctionnement,
- et les figures 4a, 4b et 4c sont des vues en élévation et en coupe de la position prise par les constituants de l'invention lors d'un désaccouplement entre la tige de commande et son ensemble absorbant associé par les besoins d'un rechargement du coeur du réacteur, d'une maintenance, ou autre.

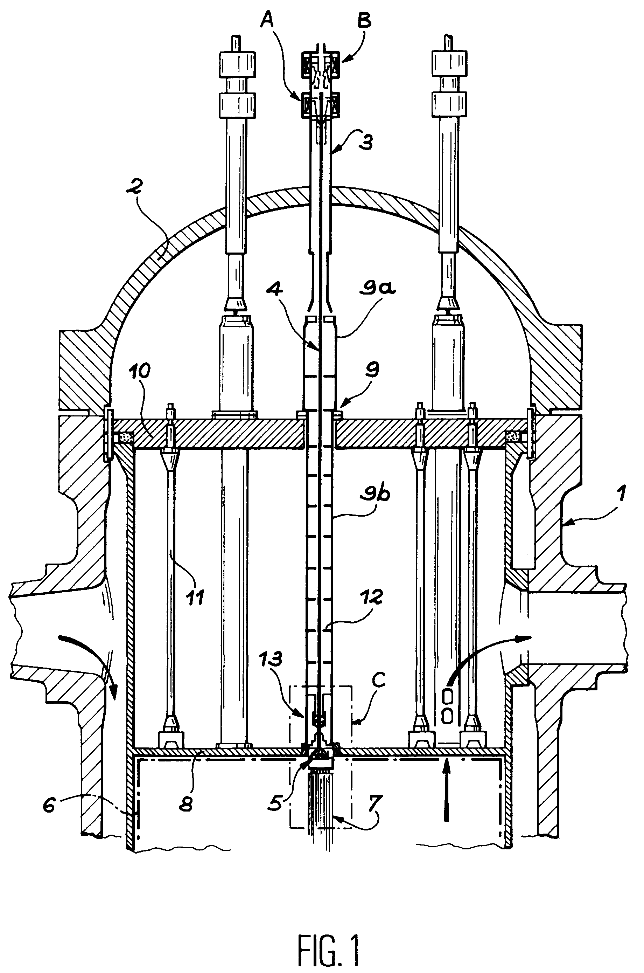

Sur la figure 1, on voit la cuve 1 d'un réacteur nucléaire à eau sous pression fermée à sa partie supérieure par un couvercle 2 supportant des enceintes étanches 3.

A l'intérieur de chacune des enceintes étanches 3 sont disposés deux mécanismes électromécaniques superposés : un mécanisme à vis-écrou et écrou séparable A et un mécanisme à cliquets B. Le mécanisme A permet le déplacement vertical d'une tige de commande 4, à la partie inférieure de laquelle est suspendu un ensemble constitué d'une pluralité de crayons contenant un matériau absorbant les neutrons et nommé "grappe". Le mécanisme B, placé au-dessus du mécanisme A, permet la présentation d'un obstacle sur le cheminement de la tige de commande 4.

Comme dans l'art antérieur, un système de détection en position de la tige de commande 4 (non représenté) est placé sur chacune des enceintes 3.

Le coeur 6 du réacteur est constitué d'un ensemble d'assemblages combustibles 7 juxtaposés. La limite supérieure du coeur 6, au-dessus des assemblages combustibles 7, est définie par une plaque de coeur 8. Le réglage de la réactivité en fonctionnement est assuré en introduisant plus ou moins profondément les grappes 5 dans certains des assemblages du coeur 6.

Au-dessus du coeur 6, les grappes 5 coulissent à l'intérieur de boîtiers 9, appelés "guides de grappes", constitués de deux éléments 9a et 9b superposés. Ces boîtiers 9 sont suspendus en position verticale à une plaque de support supérieure 10 accrochée à la cuve 1 et reliée à la plaque de coeur 8 par des colonnes de fixation 11. Ces équipements, situés au-dessus du coeur 6, forment un ensemble rigide et sont nommés "internes supérieurs".

Des plaques transversales perforées 12, placées à différents niveaux à l'intérieur des boîtiers 9, assurent un guidage discontinu de la grappe 5. Un guidage continu 13 est installé en partie basse des éléments inférieurs 9b, dans une zone où l'eau primaire provenant du coeur s'échappe radialement de ces éléments 9b pour sortir de la cuve 1.

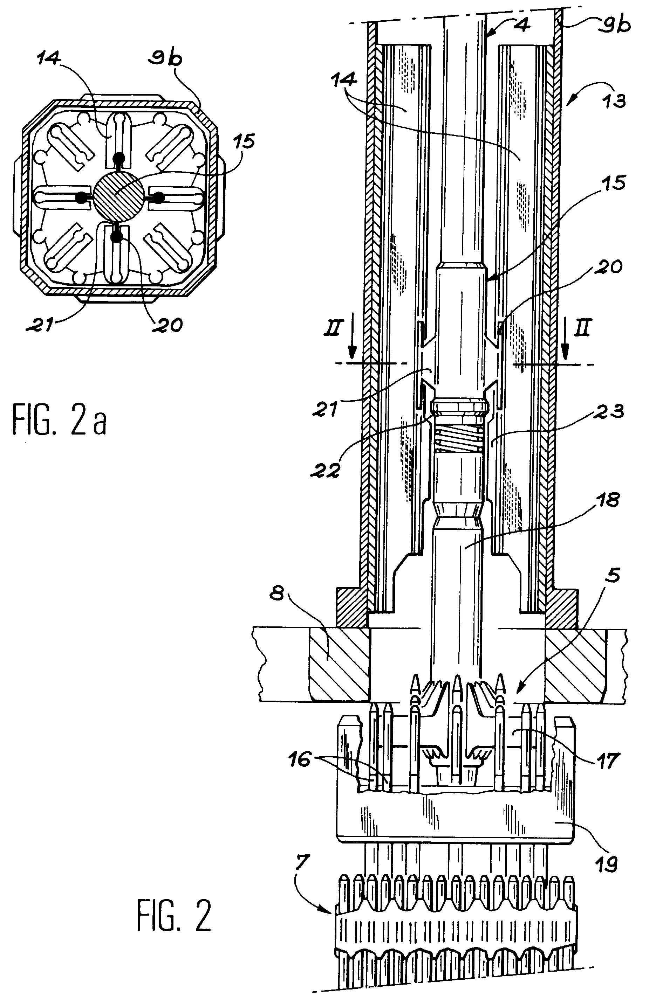

Sur la figure 2, on voit à grande échelle le guidage continu 13 en partie constitué de fourreaux fendus 14 et les contours des moyens d'accouplement 15 reliant la tige de commande 4 à la grappe 5, cette grappe 5 étant constituée de plusieurs crayons 16 suspendus aux bras radiaux 17 d'une pièce de fixation comportant un pommeau 18 d'assemblage à la tige de commande 4.

Des doigts cylindriques 20, par exemple au nombre de quatre, sont fixés au bas de la tige de commande 4 par l'intermédiaire d'ailettes radiales 21 et coulissent à l'intérieur des fourreaux fendus 14 du guidage continu 13 lorsque cette tige 4 est déplacée sur une certaine hauteur au voisinage de sa position terminale basse.

Avant d'enlever le couvercle 2 de la cuve 1, pour par exemple procéder à une réalimentation en combustible, le réacteur est refroidi et dépressurisé, une certaine quantité de poison neutronique est diluée dans l'eau primaire et les grappes 5 sont amenées en position d'insertion maximale à l'intérieur des assemblages combustibles 7, leur pommeau 18 reposant sur l'embout supérieur 19 de l'assemblage combustible 7.

Une fois que les tiges de commande 4 sont désaccouplées et dégagées hors des pommeaux 18 des grappes 5 et le couvercle 2 de fermeture de la cuve 1 retiré, l'ensemble des tiges de commande 4 est enlevé, comme dans l'art antérieur, en soulevant les internes supérieurs. Lors de cette opération d'évacuation les tiges 4 sont soulevées par les internes supérieurs par l'intermédiaire d'un épaulement 22 qu'elles comportent en partie basse, et qui est entraîné par des dents d'accrochage 23 prévues sur des fourreaux 14 du guidage continu 13.

Enfin, le réaccouplement des tiges de commande 4 aux grappes 5 est réalisé, comme dans l'art antérieur, avant la fermeture de la cuve 1 à l'aide d'un outil spécial que l'on arrime à l'extrémité supérieure de la tige de commande 4.

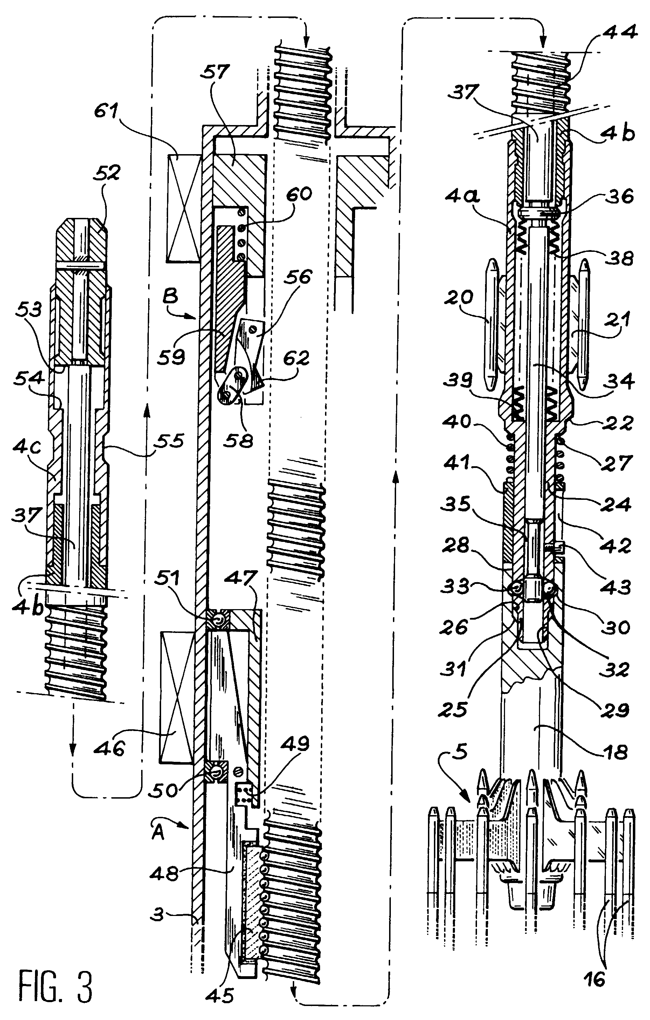

L'invention est montrée sur la figure 3.

La tige de commande 4 est constitué de bas en haut de trois chemises cylindriques 4a, 4b et 4c fixées rigidement bout à bout.

La chemise basse 4a présente en partie inférieure deux rétrécissements successifs : un premier rétrécissement 24 dont la section est cylindrique, surmontant un second rétrécissement cylindrique 25 dont la section est carrée. Le rétrécissement cylindrique 24 est raccordé, en partie basse, au rétrécissement carré 25 par l'intermédiaire d'une portée conique 26, et en partie haute, au reste de la chemise 4a par l'intermédiaire d'un épaulement 27.

Le pommeau 18 de la grappe 5 comporte un logement 28 de section cylindrique et un logement 29 de section carrée pour recevoir le bas de la chemise 4a avec un certain jeu. Une gorge de verrouillage circulaire 30 est usinée à l'intérieur du logement cylindrique 28. Ce logement cylindrique 28 est relié au logement carré 29 par l'intermédiaire d'une portée conique 31.

Une série d'évidements radiaux 32, de forme tronconique, sont creusés dans l'épaisseur de la chemise basse 4a au niveau du rétrécissement cylindrique 24 et à une même cote axiale. Les évidements tronconiques 32, dont la base débouche à l'intérieur de la chemise 4a, viennent en face de la gorge de verrouillage 30 du pommeau 18 de la grappe 5 lorsque la tige de commande 4 est enfoncée dans le pommeau 18 jusqu'à amener en contact les portées coniques 26 et 31.

A l'intérieur de chaque évidement tronconique 32 de la chemise 4a est placée une bille 33, dont le diamètre est supérieur à l'épaisseur de cette chemise 4a. La bille 33 est libre à l'intérieur de l'évidement tronconique 32. La partie rétrécie du tronc de cône est dimensionnée pour empêcher un dégagement complet de la bille 33 vers l'extérieur de la tige de commande 4.

Une tringle de verrouillage 34 est placée à l'intérieur de la chemise basse 4a. Cette tringle de verrouillage 34, comportant un peu au-dessus de son bout inférieur une gorge circulaire 35 et en partie haute un collet 36, est prolongée vers le haut par une longue tige de manoeuvre 37.

La tringle de verrouillage 34 et la tige de manoeuvre 37 constituent un ensemble rigide, pouvant être monobloc, central et coaxial à la tige de commande 4 et déplaçable suivant son axe entre une position casse et une position haute.

Un empilage de rondelles élastiques 38, monté avec une précontrainte sur la tringle de verrouillage 34, repousse vers le haut le collet 36 et donc l'ensemble constitué par la tringle de verrouillage 34 et la tige de manoeuvre 37, et prenant appui sur un épaulement 39 usiné sur la surface interne de la chemise 4a. La précontrainte des rondelles élastiques 38 est telle que ces rondelles 38 maintiennent normalement l'ensemble constitué par des éléments 34 et 37 en position haute, le dessus du collet 36 étant plaqué contre l'extrémité inférieure de la chemise intermédiaire 4b de la tige de commande 4.

Lorsque cet ensemble 34 et 37 est en position haute, la tringle de verrouillage 34 présente son bout inférieur, qui est plein, en face des billes 33.

Un ressort 40 et un tube extracteur 41 sont montés sur le rétrécissement 24 de la chemise basse 4a. Le tube 41 comporte une lumière axiale 42 dans laquelle est engagée une vis d'arrêt 43 fixée à la chemise 4a. Le ressort 40 prend appui sur l'épaulement 27 de la chemise 4a et repousse vers le bas le tube 41. Lorsque la tige de commande 4 est sortie du pommeau 18, le tube extracteur 41 est arrêté en position basse par la vis d'arrêt 42 et subit de la part du ressort 40 une poussée au moins égale au poids de la tige de commande 4.

L'épaulement 22, permettant d'évacuer les tiges de commande 4 en même temps que les internes supérieurs, est ménagé au-dessus du rétrécissement 24 de la chemise basse 4A. Au-dessus de cet épaulement 22, des ailettes 21 de supportage des doigts cylindriques 20 sont fixées sur la chemise 4a. La longueur des doigts 20, dont les extrémités sont chanfreinées, peut éventuellement être supérieure au pas d'espacement des plaques perforées 12 des guides de grappe 9, de manière à ce que ces doigts 20 puissent toujours collaborer avec une pièce de guidage (fourreau fendu 14 ou plaque perforée) quelle que soit la position axiale de la tige de commande 4.

La chemise intermédiaire 4b comporte un filetage extérieur 44, sur une hauteur un peu supérieure à la course de la grappe 5, sur lequel l'écrou en deux parties 45 du mécanisme A vient s'engager pour le déplacement de la tige de commande 4.

Le mécanisme électromécanique A comporte un moteur rotatif dont le stator 46 est disposé à l'extérieur de l'enceinte étanche 3, le rotor 47 étant placé à l'intérieur de cette enceinte 3. Le rotor 47 supporte deux bras pivotants 48, l'extrémité supérieure de ces bras 48 constituant les pôles magnétiques du rotor 47. A l'extrémité inférieure de chaque bras pivotant 48 est fixée une moitié d'écrou à rouleaux 45. Les bras 48 forment une pince qu'un ressort 49 tend à ouvrir. Le maintien des parties tournantes sur l'enceinte 3 est par ailleurs assuré par des roulements à billes 50 et 51.

La tige de manoeuvre 37 remonte à l'intérieur des chemises intermédiaire 4b et haute 4c. Un bouton-poussoir cylindrique 52 est fixé rigidement sur le bout supérieur de la tige de manoeuvre 37 et fait saillie au-dessus de chemise haute 4c quelle que soit la position relative entre la tige de manoeuvre 37 et la tige de commande 4. Lorsque l'ensemble constitué par la tige de manoeuvre 37 et la tringle de verrouillage 34 est en position basse, la base 53 du bouton-poussoir 52 est en appui sur un épaulement 54 usiné à l'intérieur de la chemise haute 4c et la gorge 35 de la tringle de verrouillage 34 est présentée en face des billes 33.

Une gorge d'arrimage 55 est usinée sur la surface extérieure de la chemise haute 4c pour l'engagement de l'élément de prise de l'outil spécial de réaccouplement.

Enfin, à l'intérieur de l'enceinte étanche 3 et à une certaine distance au-dessus du bouton-poussoir 52 lorsque la tige de commande est dans sa position terminale basse, le pommeau 18 reposant sur l'embout supérieur 19 de l'assemblage combustible 7, sont placés à un même niveau les cliquets 56 du mécanisme électromécanique B.

Les cliquets 56, pouvant, par exemple, être au nombre de trois et situés à 120°, sont suspendus, au niveau de leur extrémité supérieure, avec une possibilité de basculement, à un pôle magnétique annulaire supérieur 57, ce pôle 57 étant fixé rigidement à l'enceinte étanche 3 qui le reçoit. Les cliquets 56 sont solidaires au niveau de leur extrémité inférieure d'une biellette 58, cette biellette 58 étant elle-même solidaire d'un pôle magnétique annulaire inférieur 59 mobile axialement à l'intérieur de l'enceinte 3. Les pôles magnétiques fixe 57 et mobile 59 sont repoussés l'un de l'autre par un ressort 60. Un bobinage annulaire 61 est monté au droit de ces pôles 57 et 59 à l'extérieur de l'enceinte étanche 3 qui est amagnétique. Enfin, les cliquets 56 sont équipés en partie basse d'une dent 62 orientée vers la tige de commande 4.

Nous allons maintenant décrire le fonctionnement de l'invention entre deux réalimentations du coeur du réacteur en combustible.

La position prise par les constituants de l'invention lors du fonctionnement normal du réacteur est celle de la figure 3.

La tige de commande 4 est accouplée en translation à la grappe 5. La tringle de verrouillage 34 est maintenue en position haute sous l'effet de la poussée exercée par l'empilage de rondelles élastiques 38 sous le collet 36. Le dessus du collet 36 bute contre l'extrémité inférieure de la chemise intermédiaire 4b et la tringle de verrouillage 34 présente en face des billes 33 une partie pleine qui maintient ces billes 33 en partie engagées dans l'épaisseur de la chemise basse 4a et dans la gorge de verrouillage 30 du pommeau 18 de la grappe 5.

Les billes 33 transmettent au pommeau 18 de la grappe 5 les efforts axiaux exercés par le mécanisme A sur la tige de commande 4 ; la partie pleine de la tringle de verrouillage 34 maintient les billes 33 dans une position radiale qui permet la transmission de ces efforts. En repoussant le tube extracteur 41, qui aboute le pommeau 18 de la grappe 5, le ressort 40 tend à maintenir un contact permanent entre les billes 33 et les pièces 18, 4a et 34 avec lesquelles elles collaborent.

Le stator 46 du mécanisme électromécanique A est sous tension. Ce stator 46 attire ainsi la partie supérieure des bras pivotants 48 de façon que les deux demi-écrous 45 soient maintenus en position de fermeture sur le filetage 44 de la tige de commande 4. L'alimentation des bobines du stator 46 de façon à créer dans ce stator 46 un champ tournant provoque la rotation des deux parties d'écrou 45, entraînant la montée ou la descente de la tige de commande 4, cette tige 4 étant immobilisée en rotation par l'engagement du carré 25 qui la termine en partie basse dans le logement 29 du pommeau 18 de la grappe 5, la grappe 5 étant elle-même arrêtée en rotation par les crayons 16 coulissant à l'intérieur des pièces de guidage 14 ou 12 du guide de grappe 9.

Le pôle magnétique mobile inférieur 59 du mécanisme électromécanique à cliquets B est maintenu écarté du pôle magnétique fixe supérieur 57 par le ressort 60 et agit ainsi sur les biellettes 58 de façon que ces biellettes 58 maintiennent les cliquets 56 complètement escamotés à l'intérieur du pôle fixe 57 qui les porte. Cette disposition des cliquets 56 rend improbable leur accrochage avec la tige de commande 4 qui coulisse entre les cliquets 56 pour le réglage de la réactivité du coeur.

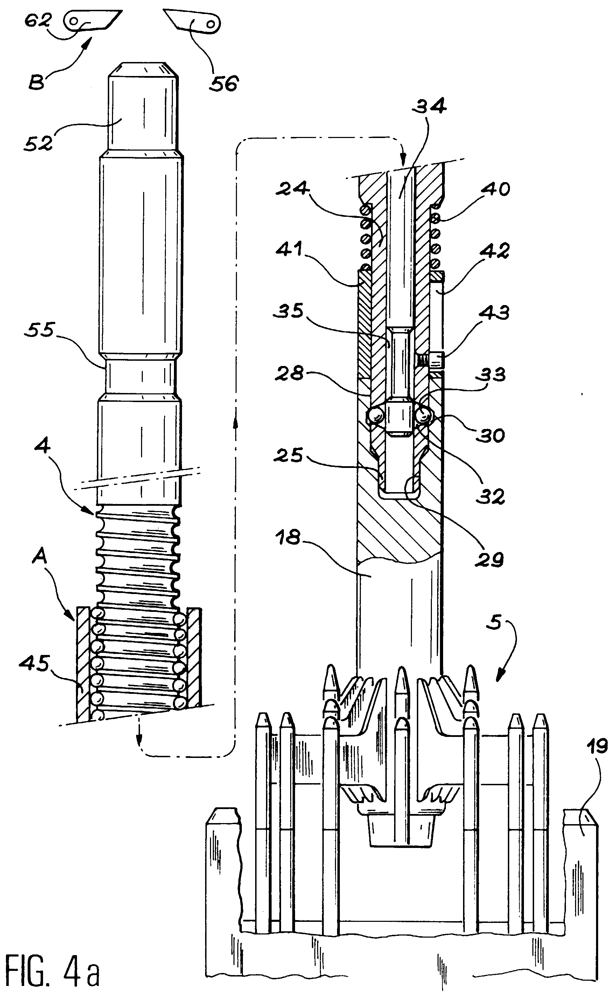

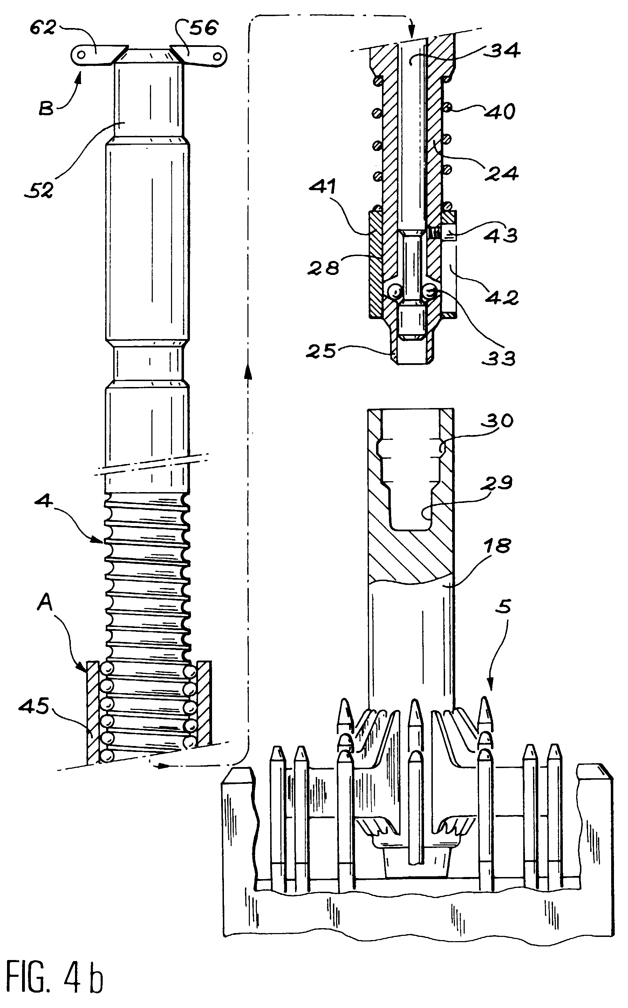

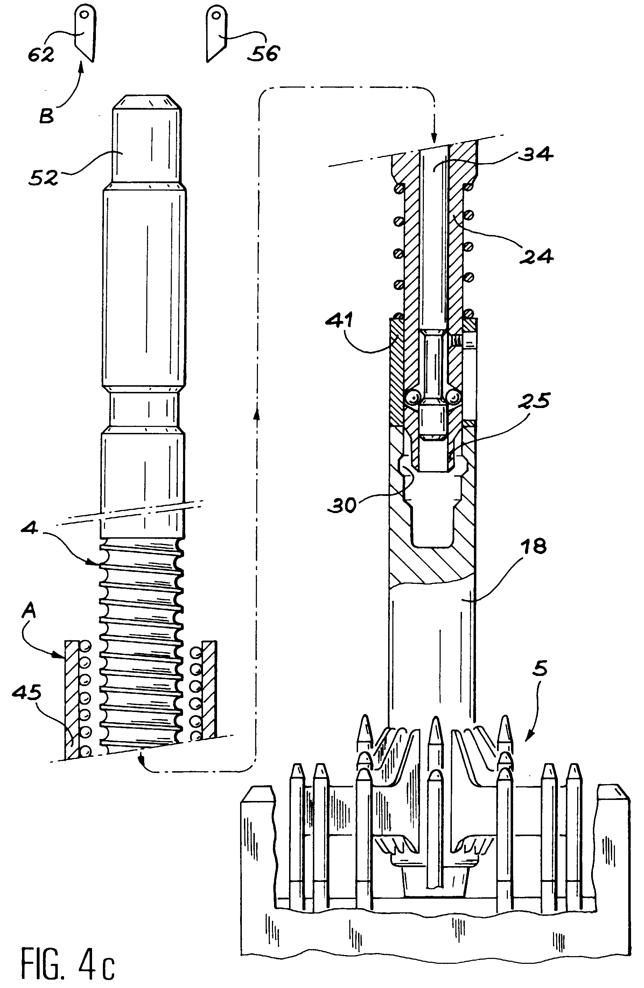

Avant d'ouvrir la cuve, pour les besoins d'une réalimentation en combustible, on effectue sur chacune des tiges de commande les opérations décrites ci-après en se référant aux figures 3, 4a, 4b et 4c.

Au départ, l'écrou en deux parties 45 est en prise avec la tige de commande 4, et la grappe 5 que l'on veut décrocher est en position d'insertion maximale dans l'assemblage combustible, ou presque. Dans ce second cas, illustré sur la figure 4a, le pommeau 18 de la grappe 5 est situé à quelques centimètres au-dessus de l'embout supérieur 19 de l'assemblage combustible 7.

La bobine extérieure 61 de commande du mécanisme électromécanique à cliquets B est alimentée par un courant continu et aimante ainsi les deux pôles magnétiques 57 et 59. Le pôle mobile inférieur 59 est attiré vers le pôle supérieur fixe 57 et les biellettes 58, solidaires du pôle mobile 59, poussent ainsi radialement l'extrémité inférieure des cliquets 56 ; ce qui les fait tourner autour de leur axe fixe supérieur et présenter les dents 62 au droit de la tige de commande 4, tel qu'illustré sur la figure 4a.

Les cliquets 56 sont suffisamment éloignés du bout supérieur de la tige de commande 4, constitué par le bouton-poussoir 52, pour exclure une interférence entre ces éléments compte tenu de la précision du système de détection en position de la tige de commande 4 dont on dispose.

Ensuite, la tige de commande 4 et sa grappe associée 5 sont soulevées par la rotation de l'écrou 45, la montée de la tige de commande 4 provoquant la mise en butée du bouton-poussoir 52 contre les dents 62 des cliquets 56, puis un enfoncement de ce bouton 52 à l'intérieur de la tige de commande 4, les rondelles élastiques 38 étant comprimées.

Le mouvement de la tige de commande 4 est arrêté lorsque la course d'enfoncement du bouton-poussoir 52 est suffisante pour amener la gorge 35 de la tringle de verrouillage 34 à la hauteur des billes 33 ; ce qui autorise la séparation de la tige de commande 4 du pommeau 18 de la grappe 5, en permettant à ces billes 33 de sortir de la gorge de verrouillage 30 du pommeau 18 pour venir s'engager dans la gorge 35 de la tringle 34.

La tige de commande 4 est alors dégagée du pommeau 18 de la grappe 5 qui tombe sur l'embout supérieur 19 de l'assemblage combustible 7 (figure 4b). Lors de la descente du pommeau 18, le tube extracteur 41, repoussé vers le bas par le ressort 40, coulisse sur la tige de commande 4 et vient prendre la place qui était préalablement occupée par le pommeau 18 en rendant impossible, de manière redondante avec le rétrécissement tronconique du logement 32 des billes 33, la perte de ces billes 33 une fois que celles-ci sont dégagées du pommeau 18. Le mouvement du tube extracteur 41 est arrêté par la vis d'arrêt 43, le haut de la lumière axiale 42, que comporte ce tube 41, venant buter sur la vis 43.

Si pour une raison quelconque le mécanisme à vis-écrou A continue à soulever la tige de commande 4 après le décrochage de la grappe 5, le bouton-poussoir 52 est progressivement enfoncé dans cette tige 4 jusqu'à ce que la base 53 du bouton 52 vienne buter contre l'épaulement 54 de la chemise haute 4c de la tige 4, les billes 33 étant toujours saillantes dans la gorge 35 de la tringle de verrouillage 34 qui arrive alors en position basse. Le mécanisme A est suffisamment puissant pour ensuite poursuivre la montée de la tige de commande 4, en provoquant un escamotage des cliquets 56 par décollement des pôles magnétiques 57 et 59.

On peut, par observation de la signature électrique du mécanisme A, éviter de forcer sur les cliquets 56, les courants électriques étant dépendants du couple et donc de la force de levage. Par ailleurs, on connaît des systèmes de détection en position de la tige de commande suffisamment précis pour éviter un tel dépassement de course, qui de toute façon n'est pas dommageable pour le matériel.

Le dégagement de la tige de commande 4 hors du pommeau 18 s'étant produit, cette tige 4 est posée sur le pommeau 18 à l'aide de son mécanisme de déplacement A, puis est relâchée par coupure du courant du stator 46 et écartement consécutif des deux parties d'écrou 45 sous l'effet de la poussée des ressorts 49 sur les bras pivotants 48.

Lors de sa descente, la tige de commande 4 est guidée en rotation par les doigts 20 coulissant dans les fourreaux 14 du guidage continu 13. L'alimentation électrique de la bobine 61 de commande des cliquets 59 est coupée. Le pôle mobile inférieur 59 retombe sous l'effet de la détente du ressort 60 et amène les cliquets 56 en position de retrait en agissant sur les biellettes 58. La position prise par les constituants de l'invention et le pommeau 18 de la grappe 5 est montrée sur la figure 4c. Le tube extracteur 41 aboute le pommeau 18 de la grappe 5 qui repose sur l'embout supérieur 19 de l'assemblage combustible 7. Le ressort 40 soulève la tige de commande 4 et maintient les rétrécissements cylindrique 24 et carré 25 de cette tige 4 respectivement hors des logements cylindrique 28 et carré 29 du pommeau 18.

Les billes 33 sont maintenues en saillie dans la gorge 24 de la tringle de verrouillage 34 par le tube extracteur 41 et contrecarrent le soulèvement de cette tringle 34 sous l'effet de la poussée des rondelles 38.

Les tiges de commande 4 sont désaccouplées et dégagées du pommeau 18 de la grappe associée 5, les unes après les autres ou éventuellement par groupes restreints.

On estime que la course d'extraction totale de la grappe 5 hors de l'assemblage combustible 7 pour obtenir le désaccouplement pourrait ne pas dépasser une dizaine de centimètres. On démontre par le calcul que, dans ces conditions, la perte d'anti-réactivité consécutive serait faible et pourrait être aisément compensée par l'adjonction dans l'eau primaire d'une quantité minime de poison neutronique. Ainsi, pour disposer de la même quantité d'anti-réactivité que dans l'art antérieur, il suffirait, par exemple, si les grappes sont décrochées une à une, d'accroître la concentration en poison neutronique dans l'eau primaire de moins d'une partie pour un million.

Une fois que le couvercle 2 de la cuve 1 est enlevé, les tiges de commande 4 sont évacuées en même temps que les internes supérieurs, l'épaulement 22 que comportent ces tiges 4 venant prendre appui sur les dents d'accrochage 23 du guidage continu 13 du guide de grappe 9 lorsque les internes supérieurs sont soulevés.

On voit que la disposition de la tige de commande 4 par rapport au pommeau 18 de la grappe 5, obtenue grâce à l'invention et montrée sur la figure 4c, rend non plausible l'extraction intempestive de grappes 5 hors des assemblages combustibles 7 lors de l'opération de retrait des internes supérieurs.

Après le rechargement du coeur, les internes supérieurs sont remis en place en même temps que les tiges de commande 4 et celles-ci se retrouvent dans une position relative, par rapport à leurs pommeaux 18 respectifs, identique à celle où elles étaient avant l'enlèvement du couvercle 2, puis celui des internes supérieurs : la position indiquée sur la figure 4c. L'extrémité supérieure des tiges de commande 4 dépasse des guides de grappe 9.

Pour obtenir le réaccouplement, la tige de commande 4 est descendue jusqu'à ce que la portée 26, au bas du rétrécissement cylindrique 24 de cette tige 4, vienne buter contre la portée 31 du pommeau 18 de la grappe 5 (voir la figure 3). La descente s'effectue sous l'effet du poids de l'outillage, ce qui rend improbable un endommagement du matériel par application d'une surcharge.

La descente de la tige de commande 4 comprime le ressort 40 et fait remonter le tube extracteur 41 sur le rétrécissement 24 puis, lorsqu'en fin de mouvement les billes 33 arrivent en face de la gorge de verrouillage 30 du pommeau 18 de la grappe 5, la tringle de verrouillage 34 remonte sous l'effet de la poussée des rondelles 38 en chassant les billes 33 vers l'extérieur du logement tronconique 32 et fait saillir ces billes 33 dans la chambre de verrouillage 30 du pommeau 18. Lorsque la tringle de verrouillage 34 est en butée haute, elle présente en face des billes 33 une partie pleine qui les maintient dans la chambre de verrouillage 30 du pommeau 18 et l'accouplement est ainsi réalisé. La tige de commande 4 est ensuite relâchée.

Enfin, lorsque l'ensemble des tiges de commande 4 a été réaccouplé, le couvercle 2 est remis en place et on procède alors aux opérations de remise en route du réacteur.

On voit donc que l'invention permet, par l'usage d'un matériel d'une grande simplicité de conception et d'une grande fiabilité dans le fonctionnement, de réduire la durée de l'arrêt annuel d'un réacteur nucléaire à eau pressurisée pour rechargement et pour entretien.

Il est à noter que la réduction de la durée de l'arrêt présente un intérêt tant sur un plan économique que sur celui de la dosimétrie. Le gain économique pour un pays doté d'un parc important de réacteurs à eau sous pression, tel que la France, pourrait être d'une cinquantaine de journées de production tous les ans environ.

L'invention ne se limite pas au mode de réalisation qui vient d'être décrit ; elle en comporte au contraire toutes les variantes.

C'est ainsi qu'on peut utiliser tout autre type de mécanisme pour le déplacement de la tige de commande et l'actionnement de la tige de manoeuvre.

On peut aussi imaginer d'autres types de fixation des extrémités inférieures des tiges de commande sur l'organe de préhension des ensembles absorbants.

Enfin, l'invention s'applique non seulement aux réacteurs nucléaires à eau sous pression, mais également à tout autre type de réacteur où la commande est effectuée par des translations d'ensembles absorbants dans le coeur et où cette commande est assurée par des mécanismes disposés à l'extérieur de la cuve et est transmise aux ensembles absorbants par l'intermédiaire d'un organe de transmission traversant la cuve.

## Revendications

1. Mécanisme de désaccouplement d'une tige de commande (4) d'un élément absorbant (5, 18) pour réacteur nucléaire, comprenant une tige de manoeuvre (37) de désaccouplement, la tige de manoeuvre coulissant dans la tige de commande et ayant une extrémité supérieure (52) dépassant de la tige de commande, et un système de verrouillage (30, 32, 33) coopérant avec la tige de manoeuvre, la tige de commande et l'élément absorbant, caractérisé en ce que la tige de manoeuvre est repoussée vers le haut par un ressort (38) comprimé entre la tige de manoeuvre et la tige de commande, une butée escamotable (56) est prévue au-dessus de ladite extrémité supérieure pour appuyer sur ladite extrémité supérieure lorsque la tige de commande (4) est soulevée, et en ce que la tige de manoeuvre et le système de verrouillage sont conçus pour opérer le désaccouplement en enfonçant la tige de manoeuvre vers le bas, dans la tige de commande.

2. Mécanisme de désaccouplement selon la revendication 1, caractérisé en ce que le système de verrouillage comprend des billes (33) logées en partie dans des cavités (32) de la tige de commande (4) et disposées autour de la tige de manoeuvre (37), qui comporte une gorge (35) au-dessus d'une partie de plus grande section, et des cavités (30) de l'élément absorbant s'ouvrant sur les cavités de la tige de commande quand la tige de commande et l'élément absorbant sont accouplés, les billes étant alors en partie logées dans les cavités de l'élément absorbant, repoussées par la partie de plus grande section de la tige de manoeuvre, et les billes étant en partie logées dans la gorge de la tige de manoeuvre et retirées des cavités de l'élément absorbant quand le désaccouplement est réalisé.

3. Mécanisme de désaccouplement selon la revendication 2, caractérisé en ce que la tige de commande comprend un manchon (41) coulissant autour d'elle, couvrant ses cavités (32) quand le désaccouplement est réalisé et repoussé au-dessus desdites cavités par l'élément absorbant quand il est accouplé à la tige de commande.

4. Mécanisme de désaccouplement selon l'une quelconque des revendications 1 à 3, caractérisé en ce que la butée escamotable (56) est commandée par un mécanisme aimanté (59) coulissant vers le haut dans une gaine (3) entourant la tige de commande pour déployer la butée escamotable au-dessus de la tige de manoeuvre et vers le bas pour escamoter la butée.

5. Mécanisme de désaccouplement selon l'une quelconque des revendications 1 à 4, caractérisé en ce qu'il comprend deux doigts cylindriques (20) fixés par l'intermédiaire d'aillettes radiales (21) à une partie basse de la tige de commande (4) et coulissant dans des fourreaux fendues (14) d'une pièce de guidage continu (13) lorsque la tige de commande (4) est déplacée sur une certaine hauteur au voisinage d'une position terminale basse.
